# EUROPÄISCHE PATENTSCHRIFT

(11) **EP 3 707 552 B1**
(45) Veröffentlichungstag und Bekanntmachung des Hinweises auf die Patenterteilung: **22.02.2023**
(21) Anmeldenummer: 18807862.0
(22) Anmeldetag: 08.11.2018
(51) Int. Cl.: G02B 27/28

(54) **VERFAHREN UND VORRICHTUNG ZUR AUSKOPPLUNG EINES TEILSTRAHLS MIT EINEM SEHR KLEINEN PROZENTUALEN STRAHLANTEIL AUS EINEM OPTISCHEN STRAHL**
METHOD AND DEVICE FOR COUPLING OUT A PARTIAL BEAM HAVING A VERY SMALL BEAM PERCENTAGE FROM AN OPTICAL BEAM
PROCÉDÉ ET DISPOSITIF DE SORTIE D'UN FAISCEAU PARTIEL, AYANT UN POURCENTAGE DE FAISCEAU TRÈS FAIBLE, D'UN FAISCEAU OPTIQUE

(30) Priorität: 09.11.2017 DE 102017126221
(43) Veröffentlichungstag der Anmeldung: 16.09.2020
(73) Patentinhaber: JENOPTIK Optical Systems GmbH, 07745 Jena (DE)
(72) Erfinder: FAHR, Stephan, 07743 Jena (DE); ERBE, Torsten, 5691 SH Son en Breugel (NL); AUGUSTIN, Markus, 07743 Jena (DE)
(74) Vertreter: Schaller, Renate
(86) Internationale Anmeldenummer: PCT/DE2018/100907
(87) Internationale Veröffentlichungsnummer: WO 2019/091516

(56) Entgegenhaltungen:
- DE-A1- 10 031 414
- GB-A- 2 256 725
- GB-A- 2 528 705
- US-B1- 8 526 005

## Beschreibung

Die Erfindung betrifft ein Verfahren und eine Vorrichtung mit einem Strahlteiler, der über einen großen Spektralbereich eines auftreffenden optischen Strahls einen sehr kleinen prozentualen Strahlanteil auskoppelt, wobei die spektrale Abhängigkeit des ausgekoppelten Strahlanteils und damit seine spektrale Schwankungsbreite nur gering ist.

Typischerweise werden für eine Auskopplung eines Strahlanteils aus einem optischen Strahl teildurchlässige Spiegel verwendet, die über einen bestimmten Spektralbereich eine wenigstens annähernd konstante Reflektivität aufweisen und damit eine höchstens geringe spektrale Schwankungsbreite aufweisen. Soll nur ein kleiner Strahlanteil durch Reflexion ausgekoppelt werden, z.B. weniger als 1 %, dann darf die teildurchlässige Beschichtung des Spiegels nur einen solchen kleinen Anteil reflektieren. Die Reflektivität derartiger Beschichtungen schwankt jedoch über den gewünschten Wellenlängenbereich erheblich, z.B. zwischen 0,1 und 0,4 %, was einer Änderung des ausgekoppelten Strahlanteils um den Faktor 4 über den Wellenlängenbereich entspricht. Ein optischer Strahl kann einen Wellenlängenbereich umfassen, der über das sichtbare Licht hinaus in den Infrarotbereich und in den UV-Bereich bis hin zu Wellenlängen um 150 nm reicht.

Aus der DE 100 31 414 A1 ist eine Vorrichtung zur Vereinigung optischer Strahlung unter Ausnutzung der Polarisationseigenschaften des Lichtes bekannt. Sie umfasst eine planparallele, optisch transparente Platte mit einem Brechungsindex n, welche eine optisch wirksame erste Fläche, auf die ein erster optischer Strahl (Wirkstrahl) auftrifft und eine zur ersten Fläche parallele, optisch wirksame zweite Fläche, auf die ein zweiter optischer Strahl (Zielstrahl) am Ort des Austritts des ersten Strahls aus dieser zweiten Fläche auftrifft. Die Strahlengänge des ersten und des zweiten optischen Strahls sind so auf die Platte gerichtet, dass der erste und der zweite Strahl jeweils unter einem Winkel zum jeweiligen Flächenlot auftreffen, der wenigstens annähernd gleich dem Brewsterwinkel ist. Der erste und der zweite optische Strahl sind linear polarisiert, wobei die Polarisationsebene des ersten Strahls parallel zur Einfallsebene der Vorrichtung und die des zweiten optischen Strahls senkrecht zur Einfallsebene verläuft.

Bei der Vorrichtung der vorgenannten DE 100 31 414 A1 handelt es sich bezogen auf die beiden optischen Strahlen um eine Vorrichtung zu Vereinigung, aber zumindest bezogen auf den ersten der beiden optischen Strahlen auch um eine Vorrichtung zur Strahlteilung. Ausgenutzt wird hier der physikalische Effekt, dass beim Auftreffen eines linear parallel zur Einfallsebene (Grenzfläche) polarisierten optischen Strahls (p-polarisierter Strahl) auf eine Grenzfläche unter dem Brewsterwinkel der optische Strahl vollständig an der Grenzfläche gebrochen wird, wenn man unterstellt, dass diese Strahlung nur eine Wellenlänge umfasst. Da der optische Strahl Strahlung über ein ausgedehntes Wellenlängenspektrum aufweist und die Brechzahlen der an die Grenzfläche angrenzenden Medien wellenlängenabhängig sind, ist auch der Brewsterwinkel wellenlängenabhängig. Das heißt, es wird nur der spektrale Anteil des Strahls vollständig an der Grenzfläche gebrochen, für den der Auftreffwinkel ideal dem Brewsterwinkel entspricht. Spektrale Anteile angrenzender Spektralbereiche werden geringfügig reflektiert, so dass wie in der vorgenannten DE 100 31 414 A1 ausgeführt, der an der Grenzfläche in die Planplatte eintretende Strahlanteil sehr groß gegenüber dem an der Grenzfläche reflektierten Strahlanteil ist. Der reflektierte Stahlanteil wird einem Fotoempfänger zugeleitet. Hier nicht aufgeführt, aber physikalisch begründet, ist die hohe Schwankungsbreite des reflektierten Strahlanteils über das Wellenlängenspektrum des optischen Stahls.

Es ist die Aufgabe der Erfindung, ein Verfahren und eine Vorrichtung zu finden, mit denen unter Ausnutzung der Polarisationseigenschaften des Lichtes aus einem optischen Strahl ein nur sehr kleiner Strahlanteil, vorteilhaft mit einer geringen Schwankungsbreite über das Wellenlängenspektrum des optischen Strahls, ausgekoppelt werden kann.

Die Aufgabe für eine Vorrichtung ist mit den Merkmalen des Anspruches 1 erfüllt.

Die Aufgabe für ein Verfahren ist mit den Merkmalen des Anspruches 3 erfüllt.

Vorteilhafte Ausführungen sind in den rückbezogenen Unteransprüchen angegeben.

Die Erfindung soll nachfolgend anhand von Ausführungsbeispielen mit Hilfe von Zeichnungen näher erläutert werden. Hierzu zeigen:
- Fig. 1: Prinzipskizze eines Strahlteilers einer Vorrichtung,
- Fig. 2: Prinzipskizze einer Vorrichtung mit einem Strahlteiler,
- Fig. 3a: Diagramm zur Darstellung der Brechzahlen n₁(λ) und n₂(λ) für ein erstes Ausführungsbeispiel eines Strahlteilers einer Vorrichtung und dem Eintrag einer Brechzahl nₐ für die der Auftreffwinkel α der Brewsterwinkel ist,
- Fig. 3b: Diagramm zur Darstellung des reflektierten prozentualen Strahlanteils R₁, R₂, R₃ an den einzelnen Grenzflächen A₁, A₂, A₃ eines Strahlteilers einer Vorrichtung, mit den Brechzahlen n₁(λ) und n₂(λ) gemäß Fig. 3a und des sich daraus ergebenden summarisch reflektierten prozentualen Strahlanteils Rₛᵤₘ für den Strahlteiler,
- Fig. 4a: Diagramm zur Darstellung der Brechzahlen n₁(λ) und n₂(λ) für ein zweites Ausführungsbeispiel eines Strahlteilers einer Vorrichtung und dem Eintrag einer Brechzahl nₐ für die der Auftreffwinkel α der Brewsterwinkel ist,
- Fig. 4b: Diagramm zur Darstellung des reflektierten prozentualen Strahlanteils R₁, R₂, R₃ an den einzelnen Grenzflächen A₁, A₂, A₃ eines Strahlteilers einer Vorrichtung, mit den Brechzahlen n₁(λ) und n₂(λ) gemäß Fig. 4a und des sich daraus ergebenden summarisch reflektierten prozentualen Strahlanteils Rₛᵤₘ für den Strahlteiler,
- Fig. 5a: Diagramm zur Darstellung der Brechzahlen n₁(λ) und n₂(λ) für ein drittes Ausführungsbeispiel eines Strahlteilers einer Vorrichtung und dem Eintrag einer Brechzahl nₐ für die der Auftreffwinkel α der Brewsterwinkel ist und
- Fig. 5b: Diagramm zur Darstellung des reflektierten prozentualen Strahlanteils R₁, R₂, R₃ an den einzelnen Grenzflächen A₁, A₂, A₃ eines Strahlteilers einer Vorrichtung mit den Brechzahlen n₁(λ) und n₂(λ) gemäß Fig. 5a und des sich daraus ergebenden summarisch reflektierten prozentualen Strahlanteils Rₛᵤₘ für den Strahlteiler.

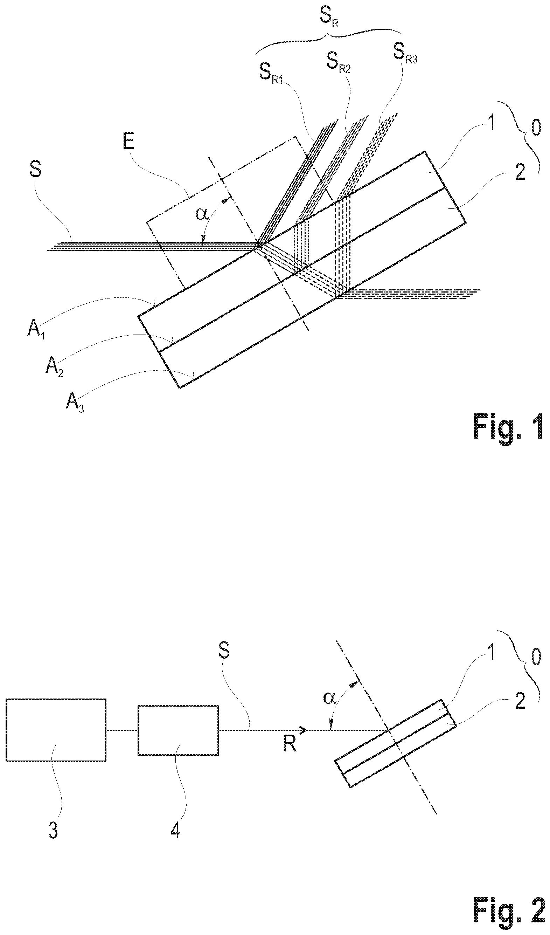

Ein Strahlteiler 0 einer erfindungsgemäßen Vorrichtung besteht grundsätzlich, wie in Fig. 1 gezeigt, aus zwei miteinander verbundenen Planplatten 1, 2, aus einem unterschiedlichen Material und weist drei Grenzflächen A₁, A₂, A₃ auf, an denen eine auftreffende optische Strahlung S abhängig von einem Auftreffwinkel α und abhängig von der Wellenlänge λ der Strahlung S teils gebrochen und teils als Teilstrahlen S_{R1}, S_{R2}, S_{R3} reflektiert wird, die gemeinsam einen summarisch reflektierten Teilstrahl S_{R} bilden. Der summarisch reflektierte Teilstrahl S_{R} soll einen nur geringen summarischen prozentualen Strahlanteil Rₛᵤₘ des optischen Strahls S aufweisen. Entsprechend ist der jeweils reflektierte prozentuale Strahlanteil R₁, R₂ und R₃ an den einzelnen Grenzflächen A₁, A₂, A₃ noch kleiner und Mehrfachreflexionen können vernachlässigt werden. Der optische Strahl S ist linear parallel zu einer Einfallsebene E polarisiert die hier in der Zeichenebene liegt. Die Einfallsebene E wird durch die Einfallsrichtung des optischen Strahls S und das Lot auf die betreffende Grenzfläche aufgespannt. Der Auftreffwinkel α wird definiert als Winkel zwischen der Einfallsrichtung des optischen Strahls S und dem Lot auf die betreffende Grenzfläche.

In nur einer Einkoppelrichtung betrachtet, bildet eine Eintrittsfläche der ersten Planplatte 1 die erste Grenzfläche A₁, eine Austrittsfläche der ersten Planplatte 1 bildet gemeinsam mit einer Eintrittsfläche der zweiten Planplatte 2 die zweite Grenzfläche A₂ und eine Austrittsfläche der zweiten Planplatte 2 bildet die dritte Grenzfläche A₃. Eine Einkopplung des optischen Strahls S in den Strahlteiler 0 erfolgt entweder über die erste Grenzfläche A₁ oder die dritte Grenzfläche A₃.

Da die erste Grenzfläche A₁ und die dritte Grenzfläche A₃ an Luft, ein Gas oder Vakuum angrenzen, welche durch eine Brechzahl von jeweils wenigstens annähernd 1 gekennzeichnet sind, wird der Brewsterwinkel an der ersten Grenzfläche A₁ bzw. dritten Grenzfläche A₃, der sich aus dem Arkustangens (arctan) des Brechzahlverhältnisses der aneinandergrenzenden Materialien errechnen lässt, aus der Brechzahl n₁(λ) bzw. n₂(λ) und 1 gebildet. Nachfolgend wird, unter dem Ansatz, dass die Brechzahl des gasförmigen Mediums gleich 1 ist, vereinfachend davon ausgegangen, dass an einer zwischen einem gasförmigen Medium oder Vakuum und einem optischen Körper gebildete Grenzfläche der Brewsterwinkel nur aus dem Arkustangens der Brechzahl des Materials des optischen Körpers berechnet wird.

Es ist erfindungswesentlich, dass das Material für die beiden Planplatten 1, 2 so ausgewählt wird, dass das Material der ersten Planplatte 1 innerhalb eines vorgegebenen Wellenlängenbereiches der optischen Strahlung S eine minimale Brechzahl n₁ₘᵢₙ aufweist, die um einen positiven Brechzahlabstand a größer ist als die maximale Brechzahl n₂ₘₐₓ des Materials der zweiten Planplatte 2, innerhalb des vorgegebenen Wellenlängenbereiches. Das heißt, es gibt eine Lücke zwischen der maximalen Brechzahl n₂ₘₐₓ des Materials der zweiten Planplatte 2 und der minimalen Brechzahl n₁ₘᵢₙ des Materials der ersten Planplatte 1.

Wird in einen so konzipierten Strahlteiler 0 ein kollimierter linear, parallel zu einer Eintrittsebene E polarisierter optischer Strahls S unter einem Auftreffwinkel α zum Lot auf die Grenzfläche A₁ oder zum Lot auf die Grenzfläche A₃ in den Strahlteiler 0 eingekoppelt, der sich als Brewsterwinkel für eine Brechzahl nₐ, größer der maximalen Brechzahl n₂ₘₐₓ der zweiten Planplatte 2, errechnen lässt und der kleiner ist als der Brewsterwinkel für die maximale Brechzahl n₁ₘₐₓ der ersten Planplatte 1 plus 5°, dann ergibt sich ein summarisch prozentualer Strahlanteil Rₛᵤₘ von kleiner 10% des optischen Strahls S.

Vorteilhaft wird der Auftreffwinkel α so ausgewählt, dass er einem Brewsterwinkel für eine Brechzahl nₐ entspricht bei dem die Reflektivität R₂ der zweiten Grenzschicht A₂ im Verhältnis zur Summe R_{Sum}=R₁+R₂+R₃ am unteren Ende des vorgegebenen Wellenlängenbereiches ein Maximum aufweist. Für einen vorgegebenen Wellenlängenbereich von beispielsweise 400 nm bis 1100 nm lässt sich so ein summarisch prozentualer Strahlanteil R_{Sum}<10% mit einer Schwankungsbreite <120% erreichen. Für einen größeren Wellenlängenbereich, z.B. von 300 nm bis 1100 nm lassen sich Schwankungsbreiten von <250 % erzielen.

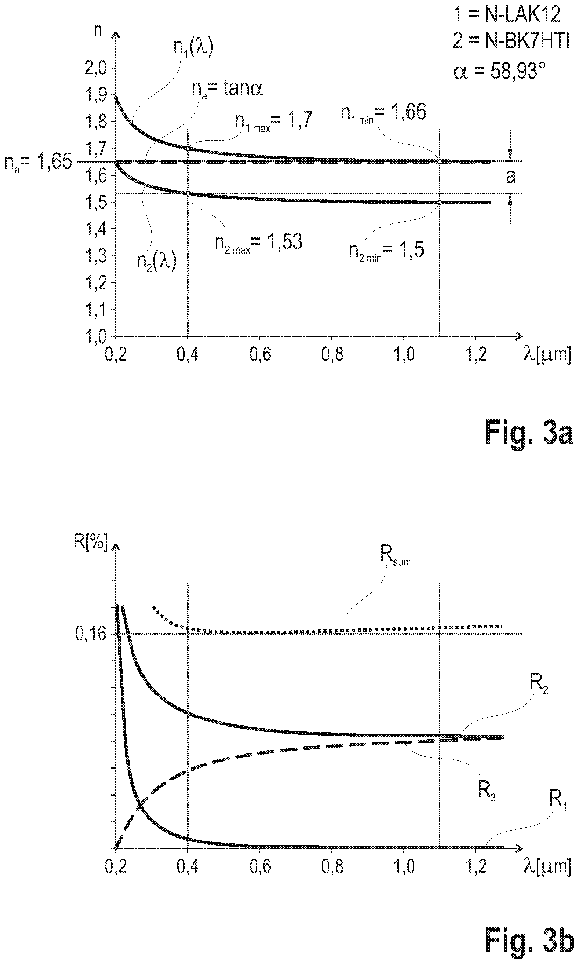

In den **Fig. 3a****,** **4a** **und** **5a** sind je ein Diagramm für die Brechzahlen n₁(λ), n₂(λ) des Materials der beiden Planplatten 1, 2 eines jeweiligen Ausführungsbeispiels für einen Strahlteiler 0 über die Wellenlänge λ dargestellt und jeweils eine Brechzahl nₐ eingetragen, für die ein ausgewählter Auftreffwinkel α den Brewsterwinkel darstellt.

Bei den Ausführungsbeispielen wurde vereinfachend davon ausgegangen, dass die Einkopplung des optischen Strahls S in den Strahlteiler 0 jeweils über die erste Grenzfläche A₁ erfolgt.

Für das Beispiel nach **Fig. 3a****,** für das in **Fig. 3b** der an den einzelnen Grenzflächen A₁, A₂, A₃ reflektierte prozentuale Strahlungsanteil R₁, R₂, R₃ sowie der summarisch prozentuale Strahlungsanteil Rₛᵤₘ, angegeben ist, wurde ein Auftreffwinkel α gleich einem Brewsterwinkel für eine Brechzahl größer n₂ₘₐₓ und kleiner n₁ₘᵢₙ ausgewählt. Als Material wurde für die erste Planplatte N-LAK 12 und für die zweite Planplatte N-BK7HTI ausgewählt. Innerhalb des vorgegebenen Spektralbereiches zwischen 400 nm und 1100 nm weist keines der beiden Materialien eine Brechzahl zwischen 1,53 und 1,66 auf. Dieser Brechzahlbereich wird als Brechzahlabstand a oder Brechzahllücke verstanden. Der hierfür ausgewählte Auftreffwinkel α beträgt 58,93° und entspricht dem Brewsterwinkel für eine Brechzahl nₐ gleich 1,65. Der summarisch prozentuale Strahlanteil Rₛᵤₘ beträgt über den vorgegebenen Spektralbereich 0,16% des optischen Strahls S, mit einer Schwankungsbreite von 2,0 %.

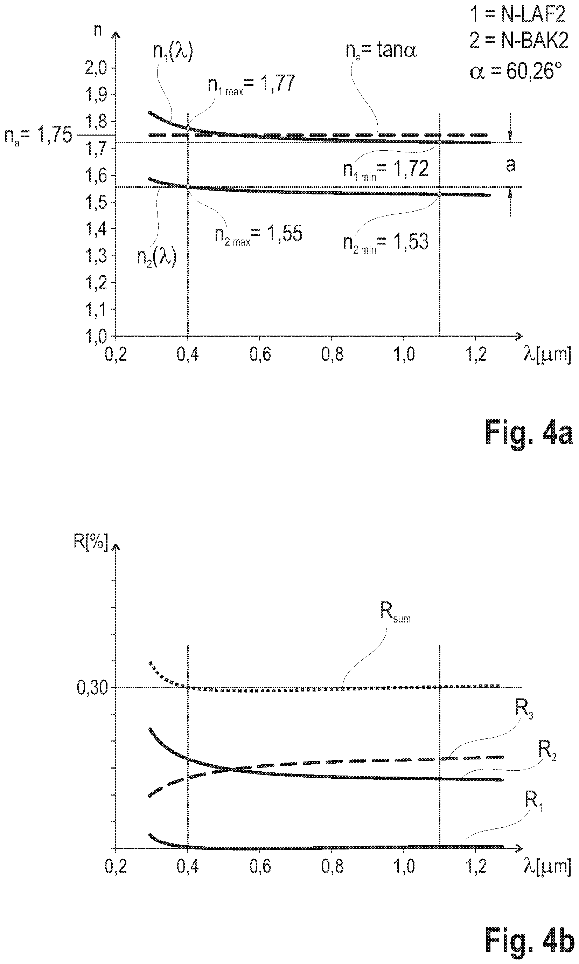

Für das Beispiel nach **Fig. 4a****,** für das in **Fig. 4b** der an den einzelnen Grenzflächen A₁, A₂, A₃ reflektierte prozentuale Strahlungsanteil R₁, R₂, R₃ sowie der summarisch prozentuale Strahlungsanteil Rₛᵤₘ, angegeben ist, wurde ein Auftreffwinkel α gleich einem Brewsterwinkel für eine Brechzahl größer n₁ₘᵢₙ und kleiner einer Brechzahl n₁ₘₐₓ ausgewählt. Als Material wurde für die erste Planplatte 1 N-LAF 2 und für die zweite Planplatte 2 N-BAK 2 ausgewählt. Der vorgegebene Spektralbereich liegt zwischen 400 nm und 1100 nm. Der hierfür ausgewählte Auftreffwinkel α beträgt 60,26° und entspricht dem Brewsterwinkel für eine Brechzahl nₐ gleich 1,75. Der summarisch prozentuale Strahlanteil Rₛᵤₘ beträgt über den vorgegebenen Spektralbereich 0,30 % des optischen Strahls S, mit einer Schwankungsbreite von 1,9 %.

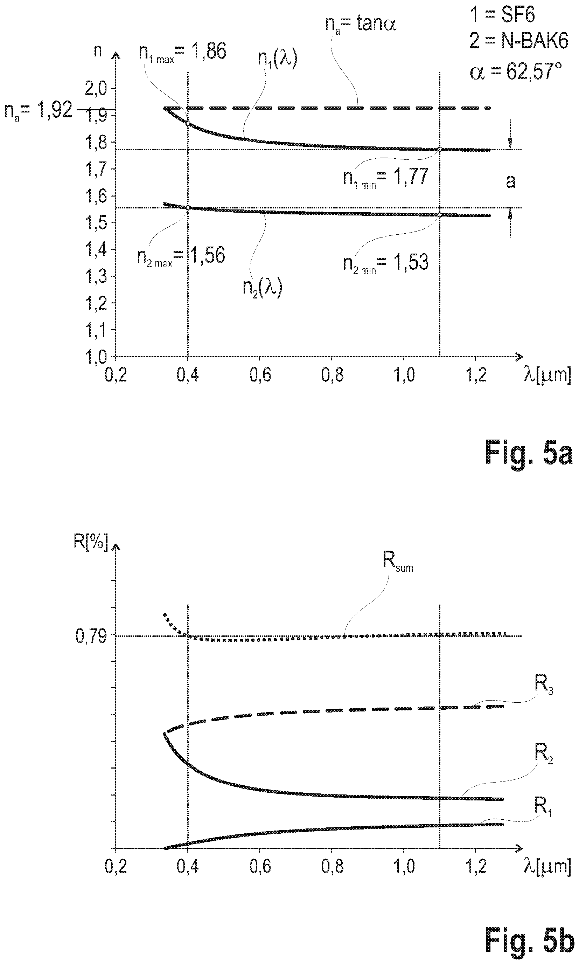

Für das Beispiel nach **Fig. 5a****,** für das in **Fig. 5b** der an den einzelnen Grenzflächen A₁, A₂, A₃ reflektierte prozentuale Strahlungsanteil R₁, R₂, R₃ sowie der summarisch prozentuale Strahlungsanteil Rₛᵤₘ, angegeben ist, wurde ein Auftreffwinkel α gewählt der kleiner ist als ein Winkel gleich dem Brewsterwinkel für eine Brechzahl gleich n₁ₘₐₓ plus 5°. Als Material wurde für die erste Planplatte 1 SF 6 und für die zweite Planplatte 2 N-BAK2 ausgewählt. Der vorgegebene Spektralbereich liegt zwischen 400 nm und 1100 nm. Der hierfür ausgewählte Auftreffwinkel α beträgt 62,57° und entspricht dem Brewsterwinkel für eine Brechzahl nₐ gleich 1,92. Der summarisch prozentuale Strahlanteil Rₛᵤₘ beträgt über den vorgegebenen Spektralbereich 0,79 % des optischen Strahls S, mit einer Schwankungsbreite von 3,2 %.

Bei den Materialangaben handelt es sich jeweils um eine Bezeichnung eines Typs von optischem Glas, wie sie im Schott-Glas-Katalog, vom Februar 2016, zu finden sind (http://www.schott.com/d/advanced_optics/1de0c3b6-522e-4ecd-b297-d1c10099a0c2/1.5/schott-optical-glass-pocket-catalog-february-2016-de.pdf).

Für alle drei aufgezeigten Ausführungsbeispiele ist die Schwankungsbreite des summarisch prozentualen Strahlanteils Rₛᵤₘ, der sich als Summe aus den an den drei Grenzflächen A₁, A₂, A₃ reflektierten prozentualen Strahlanteilen R₁, R₂, R₃ ergibt, geringer als die spektrale Schwankungsbreite der jeweils an den einzelnen der drei Grenzflächen A₁, A₂, A₃ reflektierten Strahlanteile R₁, R₂, R₃.

Eine Ausführung einer erfindungsgemäßen Vorrichtung mit dem Strahlteiler 0 ist in Fig. 2 als Prinzipskizze gezeigt. Die Vorrichtung enthält zusätzlich zum Strahlteiler 0, gebildet durch die erste und zweite Planplatte 1, 2 eine Abstrahleinheit 3, die einen kollimierten optischen Strahl S aussendet und einen in einer Abstrahlrichtung R der Abstrahleinheit 3 nachgeordneten Polarisator 4, der den optischen Strahl S linear, parallel zu einer Einfallsebene polarisiert. Die Abstrahleinheit 3, der Polarisator 4 und der Strahlteiler 0 sind so zueinander angeordnet, dass der optische Strahl S unter einem Auftreffwinkel α auf die erste Grenzfläche A₁ oder die dritte Grenzfläche A3 gerichtet auftrifft. Dabei lässt sich der Auftreffwinkel α als Brewsterwinkel für eine Brechzahl nₐ größer der maximalen Brechzahl n₂ₘₐₓ der zweiten Planplatte 2 errechnen und er ist kleiner als der Brewsterwinkel für die maximale Brechzahl n₁ₘₐₓ der ersten Planplatte 1 plus 5° innerhalb eines vorgegebenen Wellenlängenbereiches. Die Vorrichtung beinhaltet keinen Polarisator 4, wenn die Abstrahleinheit 3 einen kollimierten und bereits linear polarisierten optischen Strahl S aussendet.

### Bezugszeichenliste

- 0: Strahlteiler
- 1: erste Planplatte
- n₁(λ): Brechzahl des Materials der ersten Planplatte
- 2: zweite Planplatte
- n₂(λ): Brechzahl des Materials der zweiten Planplatte
- 3: Abstrahleinheit
- 4: Polarisator
- R: Abstrahlrichtung
- S: optischer Strahl
- S_{R1}: an der ersten Grenzfläche A₁ reflektierter Teilstrahl des optischen Strahls S
- S_{R2}: an der zweiten Grenzfläche A₂ reflektierter Teilstrahl des optischen Strahls S
- S_{R3}: an der dritten Grenzfläche A₃ reflektierter Teil des optischen Strahls S
- S_{R}: summarischer Teilstrahl des optischen Strahls S
- R₁: an der ersten Grenzfläche A₁ reflektierter prozentualer Strahlanteil (der Strahlungsintensität des optischen Strahls S)
- R₂: an der zweiten Grenzfläche A₂ reflektierter prozentualer Strahlanteil (der Strahlungsintensität des optischen Strahls S)
- R₃: an der dritten Grenzfläche A₃ reflektierter prozentualer Strahlanteil (der Strahlungsintensität des optischen Strahls S)
- Rₛᵤₘ: summarisch prozentualer Strahlanteil (der Strahlungsintensität des optischen Strahls S)
- a: Brechzahlabstand
- α: Auftreffwinkel
- λ: Wellenlänge
- nₐ: Brechzahl für die der Auftreffwinkel α einen Brewsterwinkel darstellt
- A₁: erste Grenzfläche
- A₂: zweite Grenzfläche
- A₃: dritte Grenzfläche
- E: Einfallsebene

## Patentansprüche

1. Vorrichtung mit einem Strahlteiler (0) und einer Abstrahleinheit (3), die einen kollimierten optischen Strahl (S) aussendet, wobei die Abstrahleinheit (3) entweder einen linear parallel zu einer Einfallsebene (E) polarisierten Strahl aussendet oder die Vorrichtung zusätzlich zur Abstrahleinrichtung (3) einen Polarisator (4) umfasst, der der Abstrahleinheit (3) nachgeordnet ist, um den optischen Strahl (S) linear parallel zu der Einfallsebene (E) zu polarisieren, wobei der derart bereitgestellte linear polarisierte optische Strahl (S) unter einem Auftreffwinkel (α) auf den Strahlteiler (0) auftrifft,
**dadurch gekennzeichnet, dass** der Strahlteiler (0) aus einer ersten und einer zweiten aneinander grenzenden Planplatte (1), (2) unterschiedlichen Materials besteht und für einen vorgegebenen Wellenlängenbereich des optischen Strahls (S) von 300 nm bis 1100 nm das Material der ersten Planplatte (1) eine minimale Brechzahl (n₁ₘᵢₙ) aufweist, die um einen Brechzahlabstand (a) größer ist als eine maximale Brechzahl (n₂ₘₐₓ) des Materials der zweiten Planplatte (2), womit, bei Einkopplung des kollimierten und linear parallel zu der Einfallsebene (E) polarisierten optischen Strahls (S) in den Strahlteiler (0) unter dem Auftreffwinkel (α), ein summarisch reflektierter Teilstrahl (S_{R}) mit einem summarisch prozentualen Strahlanteil (Rₛᵤₘ) von kleiner 10 % des optischen Strahls (S) mit einer spektralen Schwankungsbreite von kleiner 250 % über den vorgegebenen Wellenlängenbereich ausgekoppelt wird,
wenn der Auftreffwinkel (α) gleich einem Brewsterwinkel für eine Brechzahl (nₐ) entspricht, die größer als die maximale Brechzahl (n₂ₘₐₓ) der zweiten Planplatte (2) ist, und der Auftreffwinkel (α) kleiner ist als der Brewsterwinkel für die maximale Brechzahl (n₁ₘₐₓ) der ersten Planplatte (1) plus 5°.

2. Vorrichtung mit einem Strahlteiler (0) nach Anspruch 1, **dadurch gekennzeichnet, dass** der Auftreffwinkel (α) zwischen 56° und 68° liegt.

3. Verfahren zur Auskopplung eines Teilstrahls (S_{R}) aus einem optischen Strahl (S) mit einem vorgegebenen Wellenlängenbereich unter Verwendung einer Vorrichtung nach Anspruch 1, **dadurch gekennzeichnet,**
**dass** der optische Strahl (S) kollimiert und zu einer Einfallsebene (E) linear parallel polarisiert unter einem Auftreffwinkel (α) auf den Strahlteiler (0) gerichtet wird, wobei der Auftreffwinkel (α) gleich einem Brewsterwinkel für eine Brechzahl (nₐ) entspricht, die größer ist als die maximale Brechzahl (n₂ₘₐₓ) der zweiten Planplatte (2), innerhalb des vorgegebenen Wellenlängenbereiches, und kleiner ist als der Brewsterwinkel für die maximale Brechzahl (n₁ₘₐₓ) der ersten Planplatte (1), innerhalb des vorgegebenen Wellenlängenbereiches plus 5°.

4. Verfahren nach Anspruch 3, **dadurch gekennzeichnet,**
**dass** der Auftreffwinkel (α) so ausgewählt wird, dass er einem Brewsterwinkel für eine Brechzahl (nₐ) entspricht, bei dem der Anteil der Reflektivität (R₂) der zweiten Grenzschicht (A₂) des Strahlteilers (0) an der summarischen Reflektivität (Rₛᵤₘ) am unteren Ende des vorgegebenen Wellenlängenbereiches ein Maximum aufweist.

## Claims

1. A device comprising a beam splitter (0) and a beam emitting unit (3), which emits a collimated optical beam (S), wherein the beam emitting unit (3) either emits a beam that is linearly polarized parallel to a plane of incidence (E) or the device comprises, in addition to the beam emitting unit (3), a polarizer (4) which is arranged downstream of the beam emitting unit (3) in order to polarize the optical beam (S) linearly parallel to the plane of incidence (E), the linearly polarized optical beam (S) thus provided impinging on the beam splitter (0) at an angle of incidence (α),
**characterized in that** the beam splitter (0) consists of a first and a second adjoining planar plate (1), (2) of different material and, for a predetermined wavelength range of the optical beam (S) from 300 nm to 1100 nm, the material of the first planar plate (1) has a minimum refractive index (n₁ₘᵢₙ) which is greater by a refractive index distance (a) than a maximum refractive index (n₂ₘₐₓ) of the material of the second planar plate (2), whereby, when the collimated optical beam (S), polarized linearly parallel to the plane of incidence (E), is coupled into the beam splitter (0) at the angle of incidence (α), a summarily reflected partial beam (S_{R}) with a summary beam percentage (Rₛᵤₘ) of less than 10% of the optical beam (S) is coupled out with a spectral fluctuation range of less than 250% over the predetermined wavelength range, if the angle of incidence (α) is equal to a Brewster angle for a refractive index (nₐ) greater than the maximum refractive index (n₂ₘₐₓ) of the second planar plate (2), and the angle of incidence (α) is smaller than the Brewster angle for the maximum refractive index (n₁ₘₐₓ) of the first planar plate (1) plus 5°.

2. The device comprising a beam splitter (0) according to claim 1, **characterized in that** the angle of incidence (α) is between 56° and 68°.

3. A method for coupling out a partial beam (S_{R}) from an optical beam (S) with a predetermined wavelength range using a device according to claim 1, **characterized in that** the optical beam (S) is collimated and is directed, polarized linearly parallel to a plane of incidence (E), onto the beam splitter (0) at an angle of incidence (α), the angle of incidence (α) corresponding to a Brewster angle for a refractive index (nₐ), which is greater than the maximum refractive index (n₂ₘₐₓ) of the second planar plate (2), within the predetermined wavelength range, and smaller than the Brewster angle for the maximum refractive index (n₁ₘₐₓ) of the first planar plate (1), within the specified wavelength range plus 5°.

4. The method according to claim 3, **characterized in that** the angle of incidence (α) is selected such that it corresponds to a Brewster angle for a refractive index (nₐ) at which the reflectivity percentage (R₂) of the second interface (A₂) of the beam splitter (0) in the summary reflectivity (Rₛᵤₘ) has a maximum at the lower end of the predetermined wavelength range.

## Revendications

1. Dispositif comprenant un séparateur de faisceau (0) et une unité d'émission de rayonnement (3) qui émet un faisceau optique collimaté (S), l'unité d'émission de rayonnement (3) émettant un faisceau polarisé linéairement parallèlement à un plan d'incidence (E), ou le dispositif comprenant, en plus de l'unité d'émission de rayonnement (3), un polariseur (4), qui est placé en aval de l'unité d'émission de rayonnement (3) pour polariser le faisceau optique (S) de manière linéaire parallèlement au plan d'incidence (E), le faisceau optique (S) polarisé de manière linéaire ainsi fourni arrivant sur le séparateur de faisceau (0) sous un angle d'incidence (α),
**caractérisé en ce que** le séparateur de faisceau (0) est constitué d'une première et d'une deuxième plaque plane (1), (2) contiguës, de matériaux différents et, pour une plage de longueurs d'onde prédéterminée du faisceau optique (S) de 300 nm à 1100 nm, le matériau de la première plaque plane (1) présente un indice de réfraction minimal (n₁ₘᵢₙ) qui est supérieur d'un écart d'indice de réfraction (a) à un indice de réfraction maximal (n₂ₘₐₓ) du matériau de la deuxième plaque plane (2), ce qui fait que, lors du couplage du faisceau optique (S) collimaté et polarisé linéairement parallèlement au plan d'incidence (E) dans le séparateur de faisceau (0) sous l'angle d'incidence (α), un faisceau partiel (S_{R}) réfléchi sommairement est découplé avec une fraction de faisceau (Rₛᵤₘ) en pourcentage sommaire inférieure à 10 % du faisceau optique (S) avec une largeur de variation spectrale inférieure à 250 % sur la plage de longueurs d'onde prédéfinie, lorsque l'angle d'incidence (α) est égal à un angle de Brewster pour un indice de réfraction (nₐ) qui est supérieur à l'indice de réfraction maximal (n₂ₘₐₓ) de la seconde plaque plane (2), et l'angle d'incidence (α) est inférieur à l'angle de Brewster pour l'indice de réfraction maximal (n₁ₘₐₓ) de la première plaque plane (1) plus 5°.

2. Dispositif comprenant un séparateur de faisceau (0) selon la revendication 1, **caractérisé en ce que** l'angle d'incidence (α) est compris entre 56° et 68°.

3. Procédé de découplage d'un faisceau partiel (S_{R}) à partir d'un faisceau optique (S) avec une plage de longueurs d'onde prédéfinie en utilisant un dispositif selon la revendication 1, **caractérisé en ce que** le faisceau optique (S) est collimaté et polarisé linéairement parallèlement à un plan d'incidence (E) sous un angle d'incidence (α) sur le séparateur de faisceau (0), l'angle d'incidence (α) étant égal à un angle de Brewster pour un indice de réfraction (nₐ) qui est supérieur à l'indice de réfraction maximal (n₂ₘₐₓ) de la deuxième plaque plane (2), à l'intérieur de la plage de longueurs d'onde prédéterminée, et inférieur à l'angle de Brewster pour l'indice de réfraction maximal (n₁ₘₐₓ) de la première plaque plane (1), à l'intérieur de la plage de longueurs d'onde prédéterminée plus 5°.

4. Procédé selon la revendication 3, **caractérisé en ce que** l'angle d'incidence (α) est choisi de manière à correspondre à un angle de Brewster pour un indice de réfraction (nₐ) pour lequel la proportion de la réflectivité (R₂) de la deuxième couche limite (A₂) du séparateur de faisceau (0) par rapport à la réflectivité sommaire (Rₛᵤₘ) présente un maximum à l'extrémité inférieure de la plage de longueurs d'onde prédéterminée.
